# DEMANDE DE BREVET EUROPEEN

(11) **EP 0 847 834 A1**
(43) Date de publication de la demande: **17.06.1998**
(21) Numéro de dépôt: 97402905.0
(22) Date de dépôt: 02.12.1997
(51) Int. Cl.: B24B 9/10

(54) **Procédé de rectification du chant d'un intercalaire assemblant deux substrats**

(30) Priorité: 12.12.1996 FR 9615264
(71) Demandeur: SAINT-GOBAIN VITRAGE, 92400 Courbevoie (FR)
(72) Inventeur: Beyrle, André, 60170 Tracy-Le-Val (FR); Goerenz, Walter, 52477 Alsdorf (DE); Immerschitt, Stefan Dr., 52134 Herzogenrath (DE)
(74) Mandataire: Muller, René

(57) **Abrégé**

L'invention concerne un procédé de rectification du chant d'un intercalaire (4) assemblant deux substrats (2,3).

Selon l'invention, on réalise une abrasion d'au moins une partie dudit chant.

L'invention concerne également un vitrage se rapportant à l'exécution du procédé.

## Description

La présente invention est relative à un procédé de rectification du chant d'un intercalaire flexible transparent assemblant au moins deux substrats rigides transparents, notamment en verre.

Elle concerne également un vitrage feuilleté fabriqué selon ce procédé.

Les vitrages feuilletés, notamment de sécurité qui retiennent les éclats de verre en cas de bris des substrats sont usuellement formés de deux substrats de verre et d'une feuille ou couche intercalaire en matière plastique, par exemple en polyvinylbutyral. Les éléments constitutifs du vitrage sont assemblés par empilement des éléments, puis traités par un procédé de calandrage consistant en un passage de l'empilement entre des rouleaux presseurs, et en un cycle d'autoclave, à température élevée et pression contrôlée assurant l'adhérence de l'ensemble des éléments.

Au moment de l'assemblage des éléments, la feuille de matière plastique se présente sous la forme d'un primitif dont le format est légèrement plus grand que celui des deux substrats de verre qui l'enserrent.

Après l'assemblage et avant le calandrage, les parties de la feuille intercalaire qui débordent sont découpées manuellement par détourage à l'aide d'une lame métallique, la lame étant maintenue appuyée contre le chant du vitrage. C'est une opération qui peut s'avérer délicate parce que l'outil risque d'attaquer par endroits les bords des substrats de verre et de fragiliser ainsi le vitrage. En outre, elle se révèle quelquefois insuffisante et il est alors nécessaire de rectifier par une deuxième découpe plus fine appelée ébarbage, généralement après le cycle d'autoclave, les parties de l'intercalaire, suite à son fluage, qui débordent encore du vitrage. Enfin, les lames utilisées s'usent relativement rapidement, et il est nécessaire d'en changer souvent. Des dispositifs de découpe automatique ont alors été proposés, par exemple dans la demande de brevet EP 0 210 095, qui consistent à ne prévoir qu'une seule étape de découpe par détourage.

De tels dispositifs qui sont relativement fiables et qui s'intègrent facilement dans les lignes de fabrication des vitrages feuilletés ne sont cependant pas pleinement satisfaisants.

En effet :
- d'une part, le risque de fragilisation du vitrage par écaillage périphérique d'au moins un des substrats de verre n'est pas complètement évité, notamment lorsque la découpe s'effectue sur un intercalaire qui assemble deux substrats de verre légèrement décalés l'un par rapport à l'autre, ce décalage étant soit accidentel par légère erreur de positionnement relatif des deux substrats de verre, soit volontaire par exemple avec des substrats de verre de dimension(s) différente(s),
- d'autre part, il peut se produire pendant le cycle d'autoclave de légers retraits de l'intercalaire en matière plastique imputables à son ramollissement par exemple lorsque la découpe a eu lieu avant le cycle d'autoclave. Ces légers retraits peuvent conduire à un problème de délamination à la périphérie du vitrage aux interfaces verre/ intercalaire en plastique, ce qui peut remettre en cause la fonction de sécurité du vitrage par fragilisation mécanique et peut également induire des défauts optiques.

L'invention a pour but un procédé de rectification du chant d'un intercalaire flexible transparent assemblant deux substrats rigides transparents, notamment en verre, qui obvie aux inconvénients précités, notamment en complétant ou en se substituant à toute découpe manuelle et/ou automatique.

Pour ce faire, l'invention a pour objet un procédé de rectification du chant d'un intercalaire flexible transparent assemblant au moins deux substrats rigides transparents, notamment en verre, qui consiste à réaliser une abrasion d'au moins une partie dudit chant.

Par « intercalaire », il faut comprendre ici et dans la suite du texte, un matériau fait d'au moins une feuille essentiellement organique notamment en polymère ou en un mélange de polymères. L'intercalaire peut donc comprendre soit une feuille d'un tel matériau, soit être constitué de la superposition de plusieurs de ces feuilles. En outre, l'intercalaire au sens de l'invention peut comporter une de ces feuilles dont au moins une des faces est recouverte d'une couche mince ou d'un empilement de couches minces interférentielles.

Par « abrasion », il faut comprendre ici et dans la suite du texte, l'enlèvement de matière sans découpe de cette matière, de préférence n'impliquant pas de lissage.

Le procédé selon l'invention est d'une simplicité étonnante. Jusqu'à maintenant, on parlait volontiers d'une part du polissage du chant des substrats de verre, par exemple par meulage, et d'autre part du polissage du chant de l'intercalaire.

Ici, dans le cadre de l'invention, on rectifie l'intercalaire en contrôlant sa rugosité, à l'aide d'un traitement « différencié » approprié qui permet d'attaquer l'intercalaire tout en « épargnant » le chant des substrats en verre ; ce traitement étant effectué avec ou sans ajout d'autres éléments.

On obtient en outre une excellente finition de tranche du vitrage feuilleté, en évitant tout risque d'écaillage périphérique du verre par ce choix d'un moyen abrasif dont le pouvoir d'abrasion est modulable en fonction de la nature du matériau de chaque élément constitutif du vitrage, apte en outre à attaquer la surface d'un matériau essentiellement organique.

De façon préférée, l'abrasion est réalisée de telle sorte que la profondeur de la gorge périphérique du vitrage est égale au minimum à 0,1 mm. Avantageusement, elle est égale à 1 mm.

Par « gorge périphérique » du vitrage, il faut comprendre ici et dans la suite du texte, la rainure créée à la périphérie du vitrage par abrasion de l'intercalaire transparent, sa profondeur étant définie par la distance séparant son fond, qui est en fait le point du chant de l'intercalaire le plus en retrait, du bord du substrat rigide assemblé qui en est le plus proche.

De façon préférée encore, simultanément et/ou après l'abrasion on effectue un dépôt de matière sur au moins une partie du chant de l'intercalaire transparent.

Ainsi, en fonction du type d'abrasion effectué, et éventuellement des propriétés et de la couleur du revêtement complémentaire que l'on a apporté, on peut moduler l'aspect du chant du vitrage, à la convenance de l'utilisateur du vitrage.

Avantageusement, il peut être prévu de réaliser l'abrasion par un moyen mécanique, de préférence au moyen d'une brosse ou d'une meule.

On peut ainsi automatiser aisément la rectification et également l'intégrer dans les étapes habituelles de fabrication des vitrages feuilletés.

Un mode préféré de l'invention consiste à réaliser l'abrasion de telle sorte que la (les) partie (s) du chant de l'intercalaire abrasée (s) présente (nt) une rugosité de poli supérieure à 3 µm.

En contrôlant ainsi une rugosité de poli minimale, on supprime toute surbrillance susceptible d'apparaître sur le chant de l'intercalaire.

En effet, après découpe manuelle et/ou automatique avec ou sans détourage, un aspect brillant, sur la tranche d'un vitrage comportant un intercalaire transparent assemblant deux substrats rigides transparents, notamment en verre, peut être observé par exemple à incidence rasante et oblique par rapport au chant de l'intercalaire, tout particulièrement lorsque le vitrage est monté affleurant avec sa structure porteuse.

Or, de manière judicieuse, en choisissant un état de surface particulier de l'intercalaire, on obtient sur la tranche du vitrage une réflexion diffusante de la lumière, notamment à faible incidence.

L'invention s'applique à tout type de vitrage feuilleté qui comprend au moins deux substrats rigides transparents, notamment en verre, assemblés par un intercalaire flexible transparent essentiellement organique du type thermoplastique, notamment un bi-verre ou un tri-verre.

L' intercalaire transparent peut être au moins une feuille organique à base d'un polymère choisi parmi les polymères du type polyvinylbutyral (PVB), éthylènevinylacétate (EVA), polyuréthane (PU), chlorure de polyvinyle (PVC) ou polyéthylènetéréphtalate (PET) ou un empilement de plusieurs feuilles organiques, tel que celui décrit dans le brevet EP-A-569299, éventuellement muni d'un empilement de couches minces interférentielles déposées par une technique sous vide, du type pulvérisation cathodique assistée ou non par champ magnétique. On peut ainsi avoir une structure feuilletée du type verre/PVB /couches minces/PET/PVB/verre.

L' intercalaire transparent peut être également au moins une feuille de résine ionomère comprenant des copolymères acide carboxylique-éthylène (ou alpha oléfine) ou acide acrylique (ou méthacrylique)-éthylène (ou alpha oléfine) ou des sels métalliques ou aminés desdits copolymères acide, ces copolymères, partiellement neutralisés ou non, étant réticulés par réaction ionique. Ce type de résine est décrit notamment dans les brevets EP-483 087, EP-191 088, US- 4 619 973, US- 4 732 944 et US-4 906 703. Comme résine ionomère on peut utiliser notamment des résines à base de copolymères réticulés par réaction ionique et obtenus par combinaison de monomères d'éthylène, de styrène ou de propylène et de monomères d'acide acrylique ou méthacrylique ou d'anhydre maléique. L'adhésion de la feuille de résine ionomère peut se faire de préférence, tel qu'il est décrit dans la demande de brevet FR 96-00577, par l'intermédiaire d'au moins un chélate de métal éventuellement combiné à au moins un silane.

L'épaisseur de l'intercalaire peut être comprise entre 0,38 et 2 mm.

De même, elle s'applique à tout type de vitrage destiné à être fixe et affleurant avec sa structure porteuse, ou mobile.

Le vitrage à structure feuilletée selon l'invention peut être utilisé dans tous types de vitrages pour moyens de locomotion terrestre, maritime ou aérien: voiture, véhicules de transport collectif, trains, avions, bateaux, et tout particulièrement comme vitrage latéral mobile ou pare-brise de voiture.

Il peut être également utilisé dans le bâtiment.

D'autres détails et caractéristiques avantageuses de l'invention ressortent ci-après d'un exemple de réalisation non limitatif d'un vitrage selon l'invention décrit en référence aux figures 1a, 1b, 2 et 3 qui représentent :
- **figures 1a et 1b** : une vue en coupe d'un vitrage feuilleté à un stade de fabrication où le cycle d'autoclave est effectué,
- **figure 2** : une représentation schématique d'une étape du procédé de rectification du chant du vitrage de la figure 1a, conforme à l'invention,
- **figure 3** : une vue en coupe d'un vitrage feuilleté obtenu selon l'invention.
- **figure 4** : une vue en coupe d'un vitrage selon la **figure 3** monté en pare-brise affleurant.

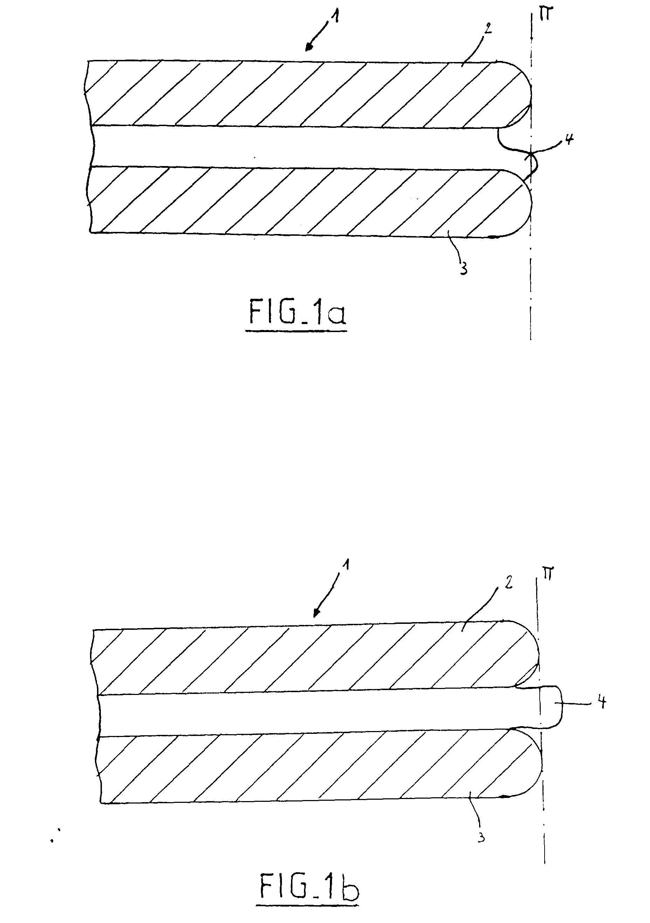

Les **figures 1a et 1b** représentent une vue en coupe d'un vitrage feuilleté 1 qui est un pare-brise de véhicule automobile constitué de deux substrats de verre silico-sodo-calcique clair 2, 3, d'épaisseur 2,2 mm assemblés par une feuille 4 en polyvinylbutyral PVB, d'épaisseur 0,76 mm, une fois le cycle d'autoclave effectué. Les chants des substrats de verre 2, 3 sont ici représentés arrondis et définissent un plan Π mais ils peuvent être également droits ou biseautés.

Pendant ce cycle d'autoclave, la feuille thermoplastique 4 en PVB se ramollit et il se peut que localement elle puisse soit « fluer » vers l'extérieur et donc déborder du plan Π, soit se « rétracter » et donc présenter un léger retrait par rapport à ce même plan Π.

Après ce stade de la fabrication et selon les endroits, ou bien la feuille considérée peut être débordante de l'ordre de 1 à 2 mm par rapport au bord des deux substrats de verre 2, 3 (figure 1a), ou bien elle est en léger retrait d'environ 1 à 2 mm (figure 1b).

Aussi pour rectifier de manière uniforme le chant de la feuille 4 débordante ou non du bord du vitrage 1, on choisit, dans le cadre de l'invention, de réaliser une abrasion de la feuille 4 en PVB au moyen d'une brosse circulaire de diamètre extérieur égal à 150 mm, et de vitesse de rotation comprise entre 1 000 et 1 800 tour/mn. Les brins de cette brosse sont en acier doux, ont une longueur d'environ 30 mm et un diamètre de 0,16 mm et ont une densité de l'ordre de 1000/cm².

Toute autre brosse de vitesse de rotation comprise entre 500 et 3500 tr/mn et dont la densité de brins est comprise entre 300 et 3000/cm², les brins étant éventuellement en laiton ou en matière plastique telle que le polyamide, peut également convenir sans crainte de fragilisation des substrats en verre 2, 3.

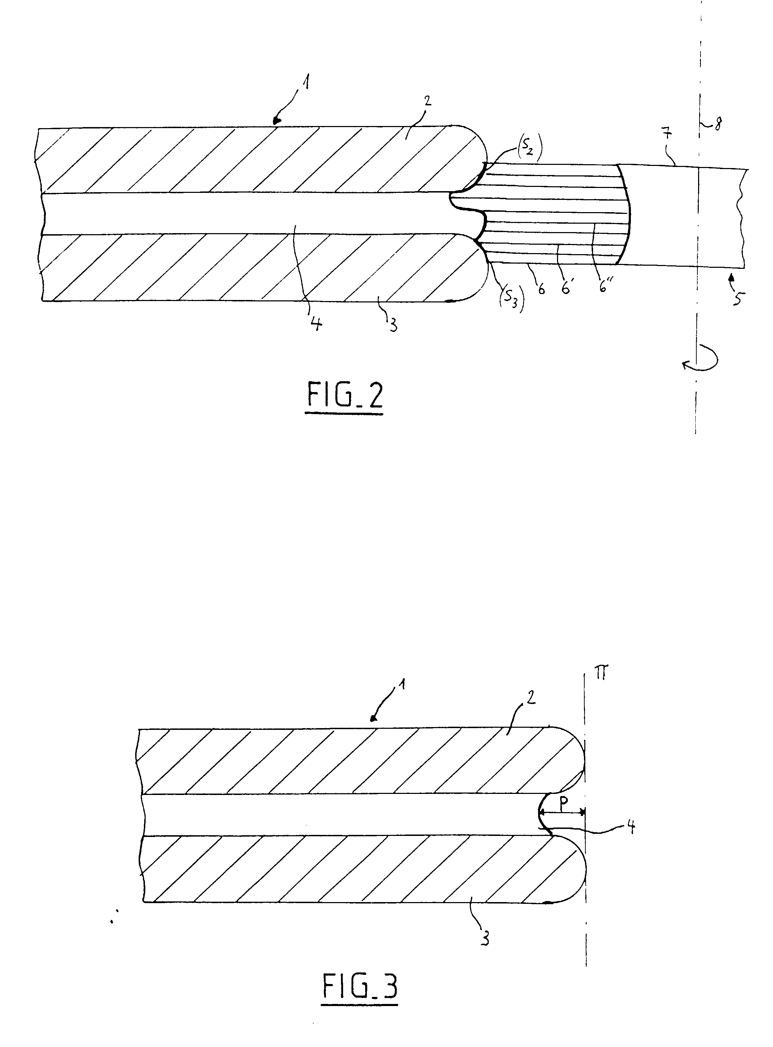

Sur la **figure 2**, on a représenté schématiquement la brosse telle qu'elle est utilisée selon l'invention. Cette brosse 5 est constituée d'un assemblage de brins 6, 6', 6"... ajustés sur une monture 7.

Elle est appliquée sur la tranche du vitrage 1 ; l'extrémité des brins 6, 6', 6" ... vient effleurer la feuille 4 en PVB, ici en retrait, et l'axe de rotation 8 de la brosse 5 est maintenu sensiblement perpendiculairement au plan du bord du vitrage 1. Les brins 6, 6', 6"... définissent une zone de contact (S) qui comprend toute la surface S₄ de la feuille 4 qu'il y a lieu d'abraser et deux surfaces S₂, S₃ des substrats de verre 2, 3. Ces dernières surfaces ne sont pas attaquées par l'action des brins 6, 6', 6 dont on a ajusté de manière adéquate la dureté. Ces surfaces de contact verre/brosse peuvent être de taille variable selon la position de la brosse 5 et sa taille, l'essentiel étant que le chant de la feuille 4 en PVB puisse être traité par la brosse 5.

Cette brosse 5 est commandée et contrôlée par asservissement et est liée à un bâti non représenté qui permet son déplacement selon trois axes cartésiens orthogonaux.

La vitesse d'avance de cette brosse 5 est réglée à environ 3 m/mn, le déplacement s'effectuant sur la totalité de la périphérie du vitrage 1. Il va de soi qu'une autre alternative envisageable peut être de maintenir fixe la brosse 5, le vitrage 1 étant monté mobile et apte à tourner autour de celle-ci.

Un tel brossage confère au vitrage 1 une gorge périphérique très régulière, telle que représentée sur la figure 3, d'une profondeur p. Cette profondeur p est égale à la distance séparant le fond de la gorge du plan II du bord du vitrage 1 et vaut 0,3 mm. Après traitement, le chant de l'intercalaire peut être soit essentiellement droit, soit courbe, notamment concave.

Il va de soi que dans le cas où les deux substrats 2, 3 de verre sont légèrement décalés l'un par rapport à l'autre que ce soit de manière accidentelle par légère erreur de positionnement relatif ou que ce soit de manière volontaire par exemple lorsque les deux substrats ont des dimensions différentes, on peut obtenir une même profondeur de gorge périphérique, celle-ci étant égale à la distance séparant le fond de la gorge du substrat 2,3 qui en est le plus proche.

En outre, la rugosité moyenne de poli de la feuille en PVB abrasée qui était avant abrasion et après cycle autoclave égale à 1 µm a été mesurée à l'aide d'un dispositif approprié connu, commercialisé sous le nom de « Sentronic 10 » par la Société TAYLOR HOBSON (qui donne la moyenne R_{z} des profondeurs de rugosité de cinq longueurs d'évaluation partielles successives) : elle est égale à 10 µm.

On note également l'absence totale d'effet de surbrillance par diminution de la réflexion lumineuse du chant du vitrage considéré par rapport à un bord d'intercalaire rectitié par découpe à l'aide d'une lame métallique.

Les résultats à différents tests sont très satisfaisants :
- aucun écaillage périphérique des bords des feuilles de verre n'a été constaté,
- aucun décollement au niveau de la feuille de PVB ne s'est produit, ni apparition de défauts optiques, ni fragilisation mécanique à la périphérie,
- un test en milieu humide a confirmé que ce brossage ne modifie nullement la durabilité du vitrage par rapport à un vitrage feuilleté traité selon les techniques de rectification antérieures connues.

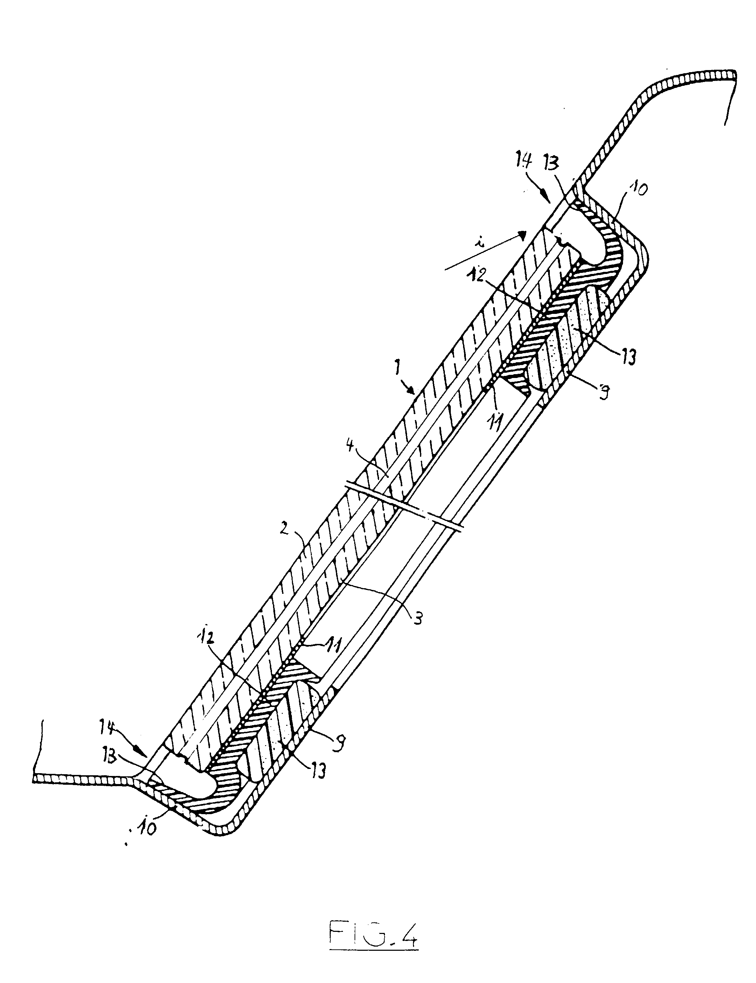

La **figure 4** représente une vue en coupe d'un vitrage 1 selon la **figure 3** monté affleurant par rapport à la baie de carrosserie d'un véhicule automobile.

Dans cette configuration, le vitrage 1 est un pare-brise dont on retrouve la structure feuilletée de la figure 3 avec les deux substrats de verre 2,3 et la feuille 4 en PVB. On le décrit ici sommairement, et pour plus de détails on se reportera avantageusement à la demande de brevet EP-0-421 833.

La baie de carrosserie automobile dans lequel il est placé est limitée d'une part par la tôle de fixation 9 qui est parallèle à la surface des substrats de verre 2, 3 du vitrage et d'autre part par la tôle 10 dont la surface est perpendiculaire à la surface du vitrage.

Ce vitrage 1 est équipé à sa périphérie sur la surface opposée à la tôle de fixation 9 d'une couche opaque 11 1 qui est par exemple constituée d'un émail cuit à chaud et dont la fonction est d'éviter que l'on puisse voir au travers du vitrage, à partir de l'extérieur, les éléments de collage et en même temps de protéger la colle 12 qui se présente ici sous forme d'un cordon et qui est composée d'un polymère conçu pour adhérer de manière fixe et permanente à la couche opaque 11 et au cadre profilé 12 réalisé en élastomère qui possède une lèvre périphérique 13.

Cette lèvre périphérique 13 possède avant l'introduction du vitrage 1 dans la baie une forme droite. Elle est à ce moment sensiblement parallèle à la surface du vitrage et déborde du chant des substrats en verre 2, 3 ici représentés à bords droits, d'environ 5 à 10 mm.

La lèvre 13 se déforme au moment de l'introduction du vitrage dans sa baie et subit une pliure vers l'arrière en se positionnant sur toute sa longueur le long de la tôle 10 qui se trouve vis-à-vis du chant des substrats en verre 2, 3. De cette manière lorsque le vitrage est introduit dans la baie, il se trouve automatiquement centré et on voit apparaître une rainure 14 de largeur constante tout autour qui est rendue étanche par la lèvre 13.

Comme déjà mentionné ci-dessus, la réflexion lumineuse du chant de la feuille 4 en PVB ayant été diminuée, aucune surbrillance n'est observée, à faible incidence, par exemple selon la direction i, par réflexion des rayons lumineux dans la rainure 14. Ainsi, vu de l'extérieur, l'aspect optique de la périphérie du vitrage 1 est très « neutre », sans brillance.

En conclusion, l'invention a mis au point un nouveau procédé de rectification du chant d'un intercalaire transparent assemblant deux substrats rigides transparents. En outre, le brossage selon ce procédé peut s'appliquer de manière très avantageuse à :
- tous les vitrages fixes feuilletés répondant à un montage affleurant sur la structure porteuse, telle qu'une carrosserie de véhicule automobile,
- tous les vitrages mobiles feuilletés en raison de l'excellente finition de tranche que le brossage procure.

Le traitement selon l'invention permet de compléter ou de se substituer à toute opération de découpe avec ou sans détourage, avec une régularité parfaite que l'intercalaire ait ou non flué lors du cycle d'autoclave.

De même, on évite toute surbrillance résiduelle de l'intercalaire transparent susceptible de se produire après autoclave.

De plus, en réalisant avantageusement ce procédé par un moyen mécanique aussi simple et peu coûteux que le brossage ou tout autre moyen abrasif non susceptible d'endommager le verre, on peut l'intégrer facilement en l'automatisant dans la ligne de fabrication des vitrages feuilletés existante.

Enfin, avec le brossage ou un moyen abrasif équivalent, on peut « régler » en l'augmentant la rugosité de l'intercalaire du chant des vitrages, ce qui est très étonnant puisque habituellement, les moyens abrasifs étaient plutôt utilisés à des fins de polissage du verre.

De manière très générale, le procédé selon l'invention est très bien adapté à tout type de vitrages feuilletés, par exemple le triple feuilleté avec un intercalaire multicouches, quelle que soit la taille du vitrage et quelle que soit la dureté relative de l'intercalaire. On remplace facilement sans surcoût notable tout ébavurage en automatisant les opérations par simple réglage de la dureté de l'abrasion et par indication de consignes de fonctionnement.

## Revendications

1. Procédé de rectification du chant d'un matériau intercalaire flexible transparent assemblant deux substrats rigides transparents, notamment en verre, **caractérisé en ce qu'on** réalise une abrasion d'au moins une partie dudit chant.

2. Procédé selon la revendication 1, **caractérisé en ce qu'on** réalise l'abrasion de telle sorte que la profondeur de la gorge périphérique du vitrage est égale au minimum à 0,1 mm, de préférence 1 mm.

3. Procédé selon la revendication 1 ou 2, **caractérisé en ce que** simultanément et/ou après l'abrasion, on effectue un dépôt de matière sur au moins une partie du chant de l'intercalaire.

4. Procédé selon l'une des revendications 1 à 3, **caractérisé en ce qu'on** réalise l'abrasion par un moyen mécanique.

5. Procédé selon la revendication 4, **caractérisé en ce qu'on** réalise l'abrasion au moyen d'une meule ou d'une brosse en acier, en laiton ou en matière plastique telle que le polyamide.

6. Procédé selon la revendication 5, **caractérisé en ce qu'on** réalise l'abrasion au moyen d'une brosse de densité de brins comprise entre 300 et 3000, de préférence 1000/cm².

7. Procédé selon la revendication 6, **caractérisé en ce qu'on** réalise l'abrasion au moyen d'une brosse dont la vitesse de rotation est comprise entre 500 et 3500 tr/mn, notamment entre 1000 et 1800 tr/mn.

8. Procédé selon la revendication 5, **caractérisé en ce qu'on** commande et contrôle par asservissement la brosse à l'aide de moyens de liaison de la brosse avec une structure permettant le déplacement de la brosse selon trois axes cartésiens orthogonaux, lesdits moyens de liaison permettant en outre une rotation de la brosse selon un axe de rotation, ledit axe de rotation étant sensiblement parallèle au chant de l'intercalaire transparent.

9. Procédé selon l'une des revendications précédentes, **caractérisé en ce qu'on** réalise l'abrasion de telle sorte que la (les) partie (s) du chant de l'intercalaire abrasée(s) présente(nt) une rugosité de poli supérieure à 3 µm, de préférence 10 µm.

10. Vitrage feuilleté comprenant au moins deux substrats rigides transparents, notamment en verre, assemblés par un intercalaire transparent, **caractérisé en ce qu**'il présente une profondeur de gorge périphérique égale au minimum à 0,1 mm, de préférence 10mm.

11. Vitrage selon la revendication 10, **caractérisé en ce que** l'intercalaire transparent comprend au moins une feuille de polymère organique, notamment en polyvinylbutyral (PVB), éthylènevinylacétate (EVA), polyuréthane (PU), chlorure de polyvinyle (PVC) ou polyéthylènetéréphtalate (PET).

12. Vitrage selon la revendication 10, **caractérisé en ce que** l'intercalaire transparent comprend au moins une feuille de résine ionomère comprenant des copolymères acide carboxylique-éthylène (ou alpha oléfine) ou acide acrylique (ou méthacrylique)-éthylène (ou alpha oléfine) ou des sels métalliques ou aminés desdits copolymères acide, l'assemblage par ladite feuille de résine ionomère se faisant de préférence par l'intermédiaire d'au moins un chélate de métal notamment combiné à au moins un silane.

13. Vitrage selon l'une des revendications 10 à 12, **caractérisé en ce que** l'intercalaire a une épaisseur comprise entre 0,38 et 2 mm, de préférence 0,76 mm.

14. Vitrage selon l'une des revendications 10 à 13, **caractérisé en ce que** l'intercalaire présente sur au moins une partie de son chant une rugosité de poli supérieure à 3 µm, de préférence 10 µm.

15. Vitrage selon l'une des revendications 10 à 14, **caractérisé en ce que** le vitrage est destiné à être fixe et affleurant avec sa structure porteuse ou mobile.

16. Vitrage selon la revendication 15, **caractérisé en ce qu**'il constitue un vitrage de véhicule automobile, notamment un pare-brise ou un vitrage latéral.

17. Utilisation d'un vitrage selon l'une des revendications 10 à 16, autorisant un aspect diffus non réfléchissant du chant du vitrage à incidence rasante.
